# EUROPEAN PATENT APPLICATION

(11) **EP 4 800 255 A1**
(43) Date of publication of application: **02.09.2026**
(21) Application number: 25184326.4
(22) Date of filing: 20.06.2025
(51) Int. Cl.: F16B 45/02

(54) **FASTENER WITH SAFETY BUCKLE**

(30) Priority: 28.02.2025 CN 202520341904 U
(71) Applicant: Taizhou Runjie Logistics Safety Equipment Science and Technology Co., Ltd., Taizhou, Jiangsu 225300 (CN)
(72) Inventor: ZHOU, Jing, 225300 Taizhou, Jiangsu (CN); YANG, Xianwei, 225300 Taizhou, Jiangsu (CN); LI, Chunzhi, 225300 Taizhou, Jiangsu (CN)
(74) Representative: Cabinet Chaillot

(57) **Abstract**

A fastener with a safety buckle, comprising an S-shaped hook and a plastic buckle; the S-shaped hook comprises a hook body, an installation end and a clamping end; the plastic buckle comprises a swing buckle and a locking buckle. Locking blocks of the locking buckle are clamped and matched with buckle fixing slots on the fixed buckle of the swing buckle. This design enables the locking buckle and the swing buckle to be tightly connected. Moreover, the locking buckle can also be fixed to the clamping end of the S-shaped hook through the locking blocks. The multiple clamping structures greatly enhance the connection stability among all parts of the S-shaped hook, effectively preventing loosening or falling off during use; adding a locking buckle increases the safety of the S-shaped hook during use. Compared with ordinary S-shaped hooks with elastic pieces, the use space of the S-shaped hook is increased.

## Description

### 1. Technical Field

This invention relates to the technical field of fasteners, in particular to a fastener with a safety buckle.

### 2. Background Art

In various fields such as industrial production, logistics transportation, and household life, fasteners, as commonly-used hanging and connecting components, are widely applied in scenarios such as hoisting items, hanging tools, and organizing and storing. Traditional fasteners have a relatively simple structure, usually consisting only of a single S-shaped hook made of metal or plastic, and there are some deficiencies in actual use.

On the one hand, when existing fasteners are connected to other components, the connection methods are often not firm and reliable enough. For example, in some cases where frequent loading and unloading or large tensile forces are required, connection loosening or even falling-off is likely to occur, which will not only affect work efficiency but also may lead to safety accidents, causing potential threats to personnel and equipment. On the other hand, the structural flexibility of traditional S-hooks is poor, making it difficult to adapt to different working environments and usage requirements. In some special installation scenarios, due to the fixed angle and position of the fasteners, effective adjustment cannot be carried out, resulting in poor cooperation with other components and limiting the application range of the fasteners.

In addition, during the installation and disassembly process of existing fasteners, the operations are often rather cumbersome and may require the use of specific tools, increasing the use cost and time cost. Moreover, when the fasteners need to be replaced due to damage, the disassembly and replacement process is difficult because of the unreasonable structural design, affecting the maintenance efficiency of the equipment.

In order to solve the above problems in the existing technology, the invention provides a fastener with a safety buckle. Through the unique S-shaped hook structure and the ingenious design of the plastic buckle, the connection stability and structural flexibility of the S-shaped hook are effectively improved, and at the same time, the installation and disassembly process is simplified, having broad application prospects and practical value.

### 3. Summary of the Invention

In view of the above problems, the invention proposes a fastener with a safety buckle.

The specific technical scheme is as follows:
The fastener with the safety buckle, comprises an S-shaped hook and a plastic buckle; the S-shaped hook comprises a hook body, an installation end and a clamping end; the plastic buckle comprises a swing buckle and a locking buckle.

Preferably, the swing buckle comprises a fixed buckle and a clamping buckle; the fixed buckle is connected to the clamping buckle through a connecting plate.

Preferably, the fixed buckle is provided with buckle fixing slots; the clamping buckle is provided with clamping blocks; the locking buckle is provided with locking blocks; the locking buckle is used in cooperation with the fixed buckle of the swing buckle; they are located on the installation end of the S-shaped hook; the locking blocks of the locking buckle is clamped into the buckle fixing slots on the fixed buckle.

Preferably, the clamping buckle of the swing buckle is located on the clamping end of the S-shaped hook and is fixed to the clamping end of the S-shaped hook through the clamping blocks inside the clamping buckle.

The advantageous effects of this invention are as follows:
in the fastener with the safety buckle of the invention, the locking blocks of the locking buckle are clamped and matched with the buckle fixing slots on the fixed buckle of the swing buckle. This design enables the locking buckle and the swing buckle to be tightly connected. Moreover, the locking buckle can also be fixed to the clamping end of the S-shaped hook through the locking blocks. The multiple clamping structures greatly enhance the connection stability among all parts of the S-shaped hook, effectively preventing loosening or falling off during use, and ensuring the safety and reliability of the S-shaped hook when carrying items; adding a locking buckle increases the safety of the S-shaped hook during use. Compared with ordinary S-shaped hooks with elastic pieces, the use space of the S-shaped hook is increased.

### 4. Brief Description of Accompanying Drawings

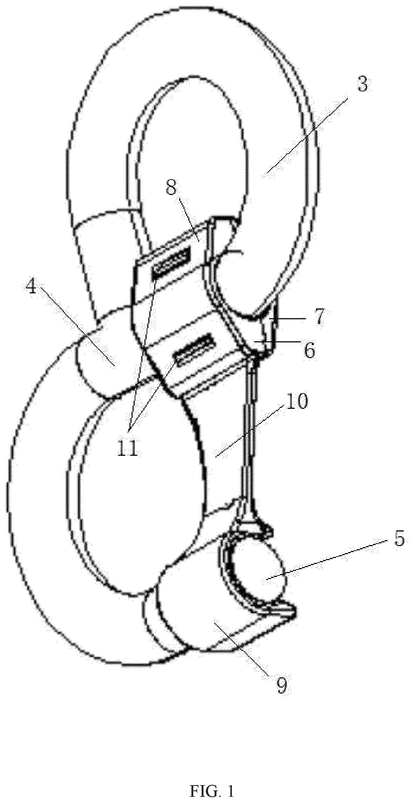

FIG. 1 is a structural diagram of the locked state of this invention.

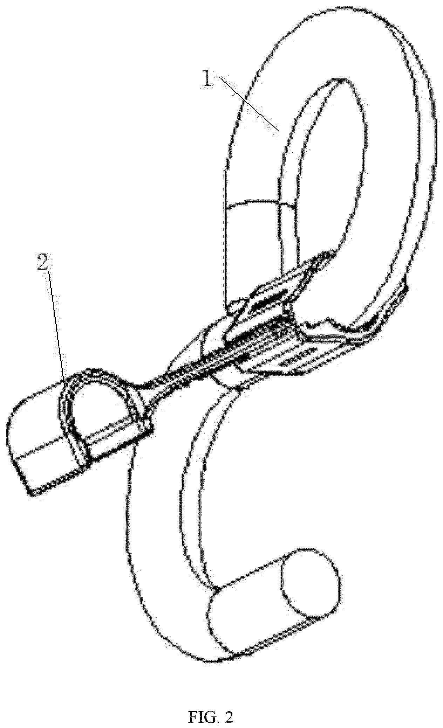

FIG. 2 is a structural diagram of the open state of this invention.

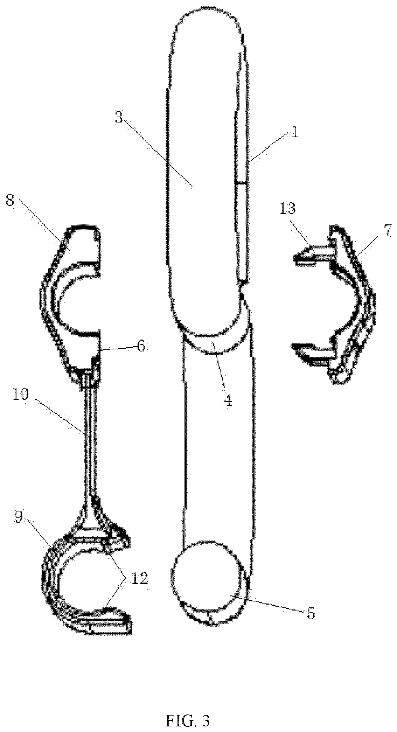

FIG. 3 is an exploded view of this invention.

In the figures: hook 1, plastic buckle 2, hook body 3, installation end 4, clamping end 5, swing buckle 6, locking buckle 7, fixed buckle 8, clamping buckle 9, connecting plate 10, buckle fixing slot 11, clamping block 12, locking block 13.

### 5. Specific Embodiment of the invention

To clarify the technical scheme of the invention, further descriptions are provided in conjunction with the drawings. Any equivalent substitutions or conventional inferences based on the technical features of the invention fall within the protection scope of the invention.

The technical schemes in the embodiments of the invention will be clearly and completely described in combination with the accompanying drawings in the embodiments of the invention. Obviously, the described embodiments are only some of the embodiments of the invention, but not all of the embodiments. The following description of at least one exemplary embodiment is merely illustrative in nature and is not intended to limit the invention or its application or uses. Based on the embodiments in this invention, all other embodiments obtained by those of ordinary skill in the art without making creative efforts shall fall within the protection scope of this invention.

In the description of the invention, it should be understood that the orientation or positional relationship indicated by the terms "upper," "middle," "outside," "inside," "lower," and "surrounding" and so on are based on the orientation or positional relationship shown in the accompanying drawings, only for the convenience of describing the invention and simplifying the description, rather than indicating or implying that the indicated device or element must have a specific orientation, as well as a specific orientation structure and operation, therefore, it should not be construed as a limitation of the invention.

A fastener with a safety buckle, comprising an S-shaped hook 1 and a plastic buckle 2; the S-shaped hook 1 comprises a hook body 3, an installation end 4 and a clamping end 5; the plastic buckle 2 comprises a swing buckle 6 and a locking buckle 7.

The swing buckle 6 comprises a fixed buckle 8 and a clamping buckle 9; the fixed buckle 8 is connected to the clamping buckle 9 through a connecting plate 10.

The fixed buckle 8 is provided with buckle fixing slots 11; the clamping buckle 9 is provided with clamping blocks 12;
the locking buckle 7 is provided with locking blocks 13;
the locking buckle 7 is used in cooperation with the fixed buckle 8 of the swing buckle 6; they are located on the installation end 4 of the S-shaped hook 1;
the locking blocks 13 of the locking buckle 7 is clamped into the buckle fixing slots 11 on the fixed buckle 8.

The clamping buckle 9 of the swing buckle 6 is located on the clamping end 5 of the S-shaped hook 1 and is fixed to the clamping end 5 of the S-shaped hook 1 through the clamping blocks 12 inside the clamping buckle 9.

In the fastener with the safety buckle of the invention, the locking blocks of the locking buckle are clamped and matched with the buckle fixing slots on the fixed buckle of the swing buckle. This design enables the locking buckle and the swing buckle to be tightly connected. Moreover, the locking buckle can also be fixed to the clamping end of the S-shaped hook through the locking blocks. The multiple clamping structures greatly enhance the connection stability among all parts of the S-shaped hook, effectively preventing loosening or falling off during use, and ensuring the safety and reliability of the S-shaped hook when carrying items; adding a locking buckle increases the safety of the S-shaped hook during use. Compared with ordinary S-shaped hooks with elastic pieces, the use space of the S-shaped hook is increased.

At the same time, the swing buckle is formed by connecting the fixed buckle and the clamping buckle through the connecting plate. This unique structural design makes the swing buckle have a certain degree of swing flexibility to a certain extent. In actual use, this flexibility can adapt to different installation environments and use requirements. For example, in some scenarios where the angle needs to be slightly adjusted, the swing buckle can swing to better cooperate with other components, improving the universality and applicability of the S-shaped hook.

By using the locking buckle in cooperation with the fixed buckle of the swing buckle and connecting them in a clamping manner, during installation, only the locking blocks of the locking buckle needs to be aligned and clamped into the buckle fixing slots of the fixed buckle to complete the installation, which is simple and convenient to operate. During disassembly, only a certain external force needs to be applied to make the locking blocks detach the buckle fixing slots, without the need for additional tools, which greatly improves the installation and disassembly efficiency and facilitates the maintenance and replacement operations of the S-shaped hook.

The above is only a more preferable specific implementation mode of this invention, but the protection scope of this invention is not limited to this. Any changes or replacements that can be easily thought of by technicians familiar with this technical field within the technical scope disclosed by this invention should be covered within the protection scope of this invention. Therefore, the protection scope of this invention should be subject to the protection scope of the claims.

## Claims

1. A fastener with a safety buckle, comprising an S-shaped hook (1) and a plastic buckle (2); the S-shaped hook (1) comprises a hook body (3), an installation end (4) and a clamping end (5); the plastic buckle (2) comprises a swing buckle (6) and a locking buckle (7).

2. The fastener with the safety buckle of claim 1, wherein the swing buckle (6) comprises a fixed buckle (8) and a clamping buckle (9); the fixed buckle (8) is connected to the clamping buckle (9) through a connecting plate (10).

3. The fastener with the safety buckle of claim 2, wherein the fixed buckle (8) is provided with buckle fixing slots (11); the clamping buckle (9) is provided with clamping blocks (12).

4. The fastener with the safety buckle of claim 1, wherein the locking buckle (7) is provided with locking blocks (13).

5. The fastener with the safety buckle of claim 4, wherein the locking buckle (7) is used in cooperation with the fixed buckle (8) of the swing buckle (6); they are located on the installation end (4) of the S-shaped hook (1).

6. The fastener with the safety buckle of claim 4, wherein the locking blocks (13) of the locking buckle (7) is clamped into the buckle fixing slots (11) on the fixed buckle (8).

7. The fastener with the safety buckle of claim 2, wherein the clamping buckle (9) of the swing buckle (6) is located on the clamping end (5) of the S-shaped hook (1) and is fixed to the clamping end (5) of the S-shaped hook (1) through the clamping blocks (12) inside the clamping buckle (9).
